# EUROPÄISCHE PATENTSCHRIFT

(11) **EP 1 644 239 B1**
(45) Veröffentlichungstag und Bekanntmachung des Hinweises auf die Patenterteilung: **15.08.2007**
(21) Anmeldenummer: 04740267.2
(22) Anmeldetag: 24.06.2004
(51) Int. Cl.: B62D 65/00

(54) **KURVENGÄNGIGES MONTAGE- UND/ODER TRANSPORTBAND**
CURVED ASSEMBLY LINE AND/OR CONVEYOR BELT
BANDE DE MONTAGE ET/OU TRANSPORTEUSE COURBE

(30) Priorität: 14.07.2003 DE 10331886
(43) Veröffentlichungstag der Anmeldung: 12.04.2006
(73) Patentinhaber: SIEMENS AKTIENGESELLSCHAFT, 80333 München (DE)
(72) Erfinder: SPOELER, Hans-Gerd, 46325 Borken (DE)
(86) Internationale Anmeldenummer: PCT/EP2004/006854
(87) Internationale Veröffentlichungsnummer: WO 2005/005234

(56) Entgegenhaltungen:
- DE-A- 4 240 989
- DE-A- 19 858 989
- US-A- 3 290 058

## Beschreibung

Die Erfindung betrifft ein kurvengängiges Montage- und/oder Transportband, insbesondere für die Montage und den Transport von Kraftfahrzeugen oder Kraftfahrzeugteilen in der Fertigung, das durch gelenkig zueinander gelagerte, formschlüssig ineinandergreifende Tragelemente gebildet wird, die jeweils eine obere Plattform und einen unteren Tragrahmen aufweisen und deren Stirnseiten mit annähernd identischen Krümmungsradien kreisbogenförmig konvex und konkav gewölbt sind, so dass jeweils eine konvexe und eine konkave Ausnehmung zweier benachbarter Tragelemente sowohl in Kurvenstrecken als auf der Geraden formschlüssig aneinanderliegend einen lückenlosen Transportbandübergang bilden.

Montage- und/oder Transportbänder dienen in der Automobilfertigung zur Aufnahme von Automobilteilen, insbesondere Karosserien, bei der Durchführung von Montagearbeiten sowie für andere Fertigungs- und Transportarbeiten. Die an den Automobilteilen arbeitenden Automobilwerker fahren üblicherweise mit dem sich langsam bewegenden Transportband mit und können sich auf den Plattformen frei bewegen. Die einzelnen Tragelemente dieser Montage- und/oder Transportbänder verfügen über Räder oder werden auf Rollenleisten abgetragen. Der Antrieb erfolgt meistens über angetrieben Rollenbatterien, die die Antriebskraft über Reibschluss auf die Tragelemente übertragen. Die Antriebsstationen sind gewöhnlich am Beginn einer geraden Förderstrecke angeordnet.

Die Kraftübertragung von Tragelement zu Tragelement erfolgt auf geraden Förderstrecken durch Schubkräfte, an den Enden der Förderstrecken werden die Tragelemente über eine Bremsstation abgebremst, um Lücken im Schubverband zu vermeiden. Hinter der Bremsstation sind üblicherweise Abzugsstationen angeordnet, die die Tragelemente "auf Lücke ziehen", um eine Querumsetzung oder eine vertikale Umsetzung, z.B. mittels eines Hebers zu ermöglichen. Meist beschreibt die Umlaufbewegung der Tragelemente ein Rechteck. Andere Layouts sind jedoch möglich.

Die bekannten Montage- und/oder Transportbänder der beschriebenen Art weisen verschiedene Nachteile auf. Soll zum Beispiel nach der Querumsetzung die Fahrtrichtung der Tragelemente beibehalten werden, so ist eine 180-Grad-Drehung der Tragelemente erforderlich. Die dafür erforderliche Eckumsetzung ist gesperrter Bereich; d.h. er steht für Montagearbeiten am PKW nicht zur Verfügung und stellt darüber hinaus, ohne einen großen Aufwand zur Absicherung, ein hohes Gefahrenpotential dar. Die Eckumsetzung selbst erfordert einen komplexen Bewegungsablauf mit hohem Steuerungsaufwand, auch die Stromversorgung der Plattformen ist aufgrund der Eckumsetzung nicht unproblematisch.

Es sind auch kurvengängige Tragelemente bekannt (DE-A-198 58 989) bekannt, die in geschlossenem Kreislauf umlaufend, das Montage- und/oder Transportband bilden, wobei sich beidseitig an eine gerade Förderstrecke eine halbkreisförmige Kurve mit üblicherweise konstantem Kurvenradius anschließt. Um insbesondere in den Kurvenstrecken Lücken und Spalte zwischen den benachbarten Tragelementen zu vermeiden, verfügen die Tragelemente jeweils über ein konkaves und ein konvexes stirnseitiges Ende mit jeweils identischem Radius und Mittelpunkt. Die Tragelemente können auch im offenen Verband betrieben werden. Der Antrieb erfolgt auch dort über stationäre Rollenbatterien oder über mitfahrende Einzelantriebe.

Bei diesen kurvengängigen Tragelementen ist es nachteilig, dass in den Kurvenstrecken aufgrund des Polygoneffektes der langgestreckten Tragelemente breite Abdeckungen erforderlich sind, die die Spalte zwischen den benachbarten Tragelementen verschließen, wodurch die in der Kurve zur Verfügung stehende Nutzfläche auf der Plattform erheblich reduziert wird. Das führt dazu, dass unterhalb eines gewissen Kurvenradius ggf. die Aufstandsfläche für beispielsweise einem PKW oder eine Karosserie zu schmal wird. Bei Kurven mit kleinem Verhältnis von Kurvenradius zur Länge der Tragelemente entsteht ein erheblicher Polygoneffekt, der insbesondere im geschlossen Kreislauf zu einer permanenten Änderung der Umlauflänge führt. Diese Längenänderungen müssen durch konstruktive Maßnahmen ausgeglichen werden; eine tangentiale Ausrichtung der Plattformen im Bogen ist bei diesem Stand der Technik nicht möglich.

Aufgabe der vorliegenden Erfindung ist die Schaffung eines kurvengängigen Montage- und/oder Transportbandes der gattungsgemäßen Art, das bei einfachem Bewegungsablauf und geringem Steuerungsaufwand auf Grund seine Konstruktion eine im wesentlichen tangentiale Ausrichtung der Plattformen im Bogenbereich ermöglicht, so dass aufgrund schmaler stationäre Abdeckungen des Montage- und/oder Transportbandes im Kurvenbereich eine größere Nutzfläche auf der Plattform zur Verfügung steht.

Zur Lösung der Aufgabe wird erfindungsgemäß vorgeschlagen dass in Längsrichtung des Montage- und/oder Transportbandes jeweils Tragelemente mit beidseitig konkaven und beidseitig konvexen Stirnseiten einander abwechseln und jeweils die Tragelemente mit beidseitig konkaven Stirnseiten als kurze Zwischenelemente zwischen den die Last aufnehmenden Tragelementen mit beidseitig konkaven Stirnseiten ausgebildet sind.

Um Lücken zwischen den Plattformen und die zum Stand der Technik beschriebenen Nachteile zu vermeiden, sind die Tragelemente so gestaltet und zu den dem Montage- und/oder Transportband zusammengesetzt, dass jeweils abwechselnd ein Tragelement über zwei konvexe und das zweite benachbarte Tragelement, das sogenannte Zwischenelement, über zwei konkave Stirnseiten verfügt.

Durch diesen Vorschlag vermindert sich der Polygoneffekt beim Umlenken der Plattformen in den Kurvenstrecken deutlich, die Orientierung der Plattformen bezüglich der Fahrtrichtung bleibt aber erhalten, so dass die bisher erforderliche Eckumsetzung entfallen kann.

Alle Tragelemente mit ihren aufgesetzten Plattformen sind mechanisch fest miteinander verbunden, d.h. es besteht keine Gefahr, dass beispielsweise durch eine Fehlfunktion der Steuerung eine Lücke zwischen zwei benachbarten Plattformen entsteht, die zu einer Personengefährdung führen könnte.

Durch die Verwendung der kurzen Zwischenelemente, die eine im wesentlichen tangentiale Ausrichtung der Tragelemente mit ihren Plattformen im Bogenbereich der Förderbahn der ermöglichen, werden aufgrund der hohen Raumausnutzung auch Montagearbeiten im Bogen möglich. Über stationäre Abdeckungen in den Kurven hinausgehende Absperrungen oder sonstige Sicherheitsmaßnahmen sind nicht erforderlich.

Die erfindungsgemäße Kinematik ermöglicht auch den Einsatz langer Tragelemente zur Aufnahme von großen Nutzlasten und langen Objekten, z.B. langen PKW's. Der modulare Aufbau des erfindungsgemäßen Transport- und Montagebandes gestattet durch einfachen Austausch der Zwischenelemente eine Änderung des Taktabstandes, ohne dass das Tragelement mit der Hauptplattform selbst geändert werden muss. Die Anlage ist insgesamt mit einem geringen Polygoneffekt betreibbar.

Vorzugsweise sind erfindungsgemäß eine Vielzahl von Tragelementen über Verbindungsglieder zu einem geschlossenen oder offenen Plattformverbund zusammengefügt. Ein geschlossener Plattformverbund führt zu einem karussellartigen Umlauf der Tragelemente auf einer in sich geschlossenen Bahn.

In einer bevorzugten Ausgestaltung der Erfindung sind die Verbindungsglieder der Tragelemente Koppelstangen, wobei jeweils zwei benachbarte, durch ein gemeinsames Zwischenstück getrennte Tragelemente mit konkaven Stirnseiten durch eine gemeinsame Koppelstange gelenkig miteinander so verbunden sind, dass die beiden Anlenkpunkte jeder Koppelstange jeweils auf den Radienmittelpunkten der kreisbogenförmig konkav gekrümmten Stirnseiten der Tragelemente liegen.

Durch die gewählte Kinematik und die Gestaltung der Tragelemente wird sichergestellt, dass die Stirnseiten der Tragelemente gegeneinander abwälzen, ohne Lücken zwischen den Plattformen entstehen zu lassen. Die Tragelemente bewegen sich in einer zur Kurvenkrümmung tangentialen Ausrichtung um die Kurve. Durch die mechanische Verbindung der Tragelemente erfolgt die sichere Verbindung auch in den Kurvenstrecken, ohne dass Zwänge im System entstehen.

Erfindungsgemäß können stirnseitig in den einander zugewandten Bereichen der Tragelemente Rollen- oder Gleitführungen vorgesehen sind, die ein reibfreies oder reibarmes Verschieben der benachbarten Tragelemente gegeneinander ermöglichen.

Der Antrieb der Tragelemente der Erfindung kann in an sich bekannter Weise durch mehrere am Fahrweg der Tragelemente verteilte Reibradstationen erfolgen. Es ist aber nach einem anderen Vorschlag der Erfindung auch möglich, dass der Antrieb des Montage- und/oder Transportbandes über mindestens jedem n-ten Tragelement zugeordnete Einzelantriebe erfolgt, die auf dem entsprechenden Tragelement mitfahrend angeordnet sind.

Im Fall von Elektroantrieben erfolgt nach einem anderen Merkmal der Erfindung die Energie- und/oder Datenversorgung der Tragelemente permanent über Schleifleitungen, die neben oder unter den Tragelementen entlang der Fahrweges verlegt sind.

Im Rahmen der Erfindung ist es auch denkbar, dass die Energie- und/oder Datenversorgung permanent oder streckenweise induktiv erfolgt. Dadurch werden störende Leitungen vermieden und Übergänge vereinfacht.

Es ist nach einem weiteren Merkmal der Erfindung vorgesehen, dass die Führung mindestens jedes zweiten Tragelementes über am Boden verlegte Führungsschienen erfolgt.

Wie bei anderen Fahrwerken bekannt, wird, um seitliche Kippstabilität zu erreichen, erfindungsgemäß die Entfernung von zwei im Abstand als Doppelspur verlegten Führungsschienen im Kurvenbereich reduziert. Dadurch werden Zwängungen der Fahrwerke durch thermische Effekte sowie durch den Polygoneffekt bei der Kurvendurchfahrt vermeiden, besonders wenn die innere der beiden Führungsschienen sowohl als Tragals auch Führungsschiene ausgelegt ist.

In den meisten Fällen ist es sinnvoll, wenn die in einem geschlossenen Plattformverband umlaufenden Tragelemente auf einer ovalen (stadionförmigen) Umlaufbahn geführt sind. In einem solchen Fall entfallen die aufwendigen Eckumsetzer und die beim Stand der Technik verwendeten, für die Montage nicht nutzbaren Querverbindungsstrecken. Statt dessen ist aufgrund der vorteilhaften Kinematik der Tragelemente nach der Erfindung auch in den Kurvenbereichen eine Montage möglich, wobei die Kapazität der Anlage durch die größere zur Verfügung stehende Nutzfläche auf der Plattform voll ausgeschöpft werden kann.

Nach einer weiteren Ausgestaltung der Erfindung erfolgt die Seitenführung der Tragelemente an äußeren und/oder inneren Tragschienen. Dabei ist eine eigene Führung der Zwischenelementes nicht erforderlich, weil durch die Kopplung mit den benachbarten, an den Führungsschienen geführten Tragelementen, die Zwischenelemente frei geführt mitgenommen werden. Die Abstandshaltung erfolgt über die Koppelstangen.

Ausgestaltend können in mindestens einzelnen Tragelementen aktive oder passive Hubeinrichtungen eingebaut werden, die der Montagehilfe dienen. Diese Hubeinrichtungen können, beispielsweise kulissengesteuert, separat ein Anheben oder Absenken eines jeden einzelnen der vier Räder eines PKW ermöglichen. Auch können andere zweckdienliche Einbauten auf den Plattformen der Tragelemente mitgeführt werden, wie zum Beispiel Absaugvorrichtungen.

Um auch Niveauänderung der Umlaufebene mit den erfindungsgemäßen Tragelementen fahren zu können, sind nach einem anderen Merkmal der Erfindung Höhenbögen in den Trag-und/oder Führungsschienen vorgesehen und die Tragelemente sind zusätzlich über horizontale Gelenken miteinander verbunden.

Schließlich ist vorgesehen, dass die als Zwischenelement ausgestalteten Tragelemente zu Inspektions- und/oder Wartungszwecken leicht abnehmbar gestaltet sind.

Nach einem besonders günstigen Merkmal der Erfindung erfolgt die vertikale Lastübertragung über mitfahrende Stahlrollen an der Unterseite der Tragelemente, wobei vorzugsweise alle Tragrollen um ihre Hochachsen drehbar gelagert sind. Bei geringem Rollwiderstand der metallischen Tragrollen ergibt sich eine flache Bauweise, die keine Grube erforderlich macht. Die Plattform selbst ist vorteilhafterweise durch eine Sperrholzschicht gebildet, die für Personen begehbar und - für die Fahrzeug-Entnahme - befahrbar ist.

Die Erfindung weist eine Vielzahl von Vorteilen auf, die nachfolgen zusammengefaßt sind:
Die Erfindung ist einfach im Aufbau und hoch funktionssicher. Durch die tangentiale Ausrichtung der Tragelemente in den Kurven, sind schmale Abdeckungen realisierbar, die einen großen Zwischenabstand auch im Bogen ermöglichen. Dadurch wird der Einbau von kulissengesteuerten Hubeinrichtungen, aktiven Hubtischen, Absaugungen etc. erleichtert. Die Tragelemente mit den Plattformen können im geschlossenem oder offenem Verband betrieben werden. Der Antrieb erfolgt in über stationäre Rollenbatterien oder über mitfahrende Einzelantriebe. Zwischen den Plattformen der Tragelemente sind keine Zwischenabdeckungen erforderlich. Die Orientierung der Plattformen bezüglich der Fahrtrichtung bleibt immer erhalten, es ist keine Eckumsetzung erforderlich. Der Bewegungsablauf ist einfach und bedarf nur eines geringen Steuerungsaufwandes. Dadurch, dass alle Plattformen mechanisch fest miteinander verbunden sind, besteht keine Gefahr, dass beispielsweise durch eine Fehlfunktion der Steuerung eine Lücke zwischen zwei benachbarten Plattformen entsteht, die zu einer Personengefährdung führen könnte. Die einheitlichen Antriebe machen geschlossene Schleifleitung für Energie- und Datenübertragung möglich.

Die Erfindung erlaubt Montagearbeiten auch im Bogen der Kurvenbereiches, dadurch ergibt sich einen hohe Raumausnutzung, weil keine über stationäre (flache) Abdeckungen, die auch im Bogen große Anteile der Nutzfläche der Hauptplattformen offen lassen, hinausgehende Absperrungen sowie sonstige Sicherheitsmaßnahmen erforderlich sind.

Durch die Maßnahmen der Erfindung können die Tragelemente und damit die Hauptplattformen größer ausgeführt sein und ermöglichen die Aufnahme von großen Nutzlasten, z.B. langen PKW's sowie weitere Einbauten, wie Absaugungen etc..

Der Taktabstand des Montage- und/oder Transportband lässt sich durch Anpassung des Zwischenelementes verändern, ohne dass die Hauptplattform geändert werden muss. Schließlich ermöglicht die Verwendung metallischer Tragrollen mit geringen Rollwiderständen eine flache Bauweise, so dass keine Grube erforderlich ist. Zu Wartungs- und Reparaturzwecken können die Abdeckung der Zwischenelemente leicht entfernt werden.

Ein Ausführungsbeispiel der Erfindung ist in der Zeichnung dargestellt und wird nachfolgend beschrieben. Es zeigt:
- Figur 1: das erfindungsgemäße Montage- und/oder Transportband für die Montage und/oder dem Transport eines Kraftfahrzeugs.
- Figur 2: ein Montage- und/oder Transportband nach dem Stand der Technik,
- Figur 3: eine vergrößerte Darstellung des Kurvenbereichs eines erfindungsgemäßen Montage- und/oder Transportbandes,
- Figur 4 und: den Rahmen eines Tragelementes nach der Erfindung
- Figur 5: ein als Zwischenelement ausgebildetes Tragelement nach der Erfindung.

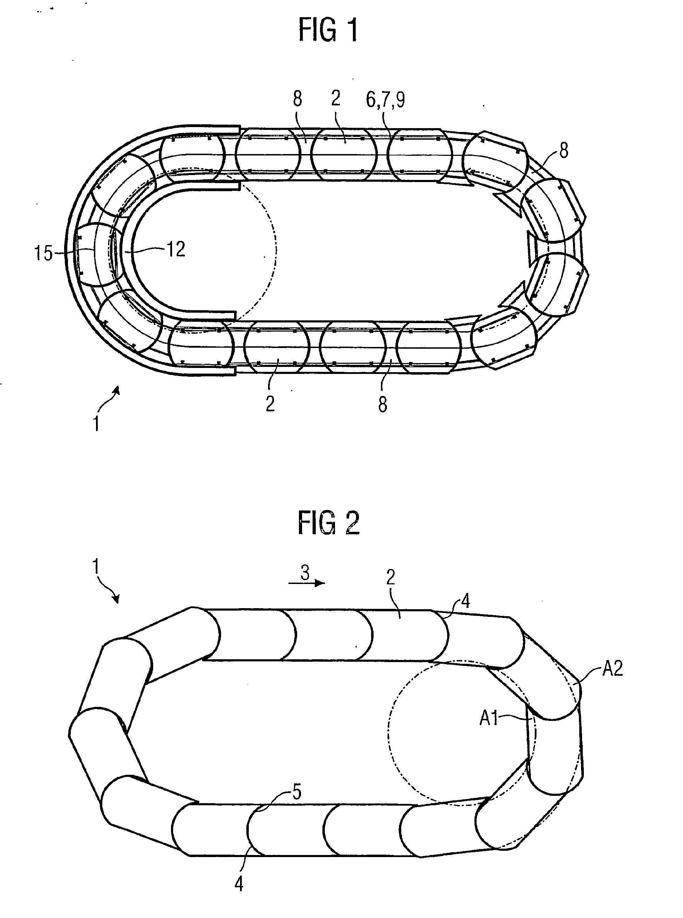

In der Zeichnungsfigur 2 wird grob schematisch ein Montage-und/oder Transportband 1 dargestellt, wie es im Stand der Technik bekannt und beschrieben ist. Das Montage- und/oder Transportband wird in der Automobilindustrie für die Montage und den Transport von Kraftfahrzeugen eingesetzt und besteht aus gelenkig zueinander gelagerten, formschlüssig ineinander greifenden Tragelementen 2, die auf einer endlosen Förderstrecke geführt sind. Die einzelnen Tragelemente 2 sind jeweils an ihren in Förderrichtung 3 voreilenden Stirnseiten 4 konvex und ihren endgegengesetzten Stirnseiten 5 konkav ausgebildet, so dass beim Umlaufen der Tragelemente 2 die voreilenden Stirnseiten 4 des einen Tragelementes 2 in den nacheilenden Stirnseiten 5 des in Förderrichtung 3 benachbarten Tragelementes 2 formschlüssig derart eingreift, dass ein lückenloser Übergang zwischen den benachbarten Tragelementen 2, sowohl im Kurvenbereich, wie auf der geraden Förderstrecke gegeben ist. Wie in Figur 2 zu erkennen ist, bewegen sich die Tragelemente 2 polygonzugartig um die Kurve, wobei sich die miteinander gekoppelten Tragelemente 2 seitlich aus dem kreisbogenartigen Kurvenverlauf bereichsweise hinausbewegen.

Wenn man berücksichtigt, dass die möglichst niveaugleich mit dem Boden langsam fortbewegten Tragelemente 2 von den Werkern gefahrlos betreten werden sollen und ggf. auch die endfertigen Fahrzeuge von der Plattform heruntergefahren werden sollen, so wird klar, dass im Kurvenbereich Maßnahmen getroffen werden müssen, um sowohl seitlich, wie auch stirnseitig der Tragelemente Lücken zu verhindern, die eine bedrohliche Gefahr für dort arbeitende Werker darstellen. Aus diesem Grund werden die sich bildenden polygonzugartigen Seitenbereich der Tragelemente 2 im Kurvenbereich von Abdeckungen A1 und A2 übergriffen, die die durch den Polygonzug entstehenden Lücken abdecken. Je ausgeprägter der Polygoneffekt beim Umlenken um die Kurve ist bzw. je enger die Kurve umgelenkt ist, desto breiter müssen die erforderlichen Abdeckungen A1 und A2 die Tragelemente 2 übergreifen. Das führt dazu, dass die zwischen den äußeren A2 und inneren Abdeckungen A1 verbleibende Arbeitsplattform im Kurvenbereich deutlich schmaler ist, als in dem Bereich, wo die Parkelemente geradeaus verlaufen. Im Extremfall kann die Plattform für ein darauf abgestelltes Fahrzeug oder eine Karosserie zu schmal sein, so dass eine Montage in dem Kurvenbereich unmöglich wird.

In der Zeichnungsfigur 1 ist grob schematisch dargestellt, wie das Problem durch die Erfindung gelöst wird. Erfindungsgemäß sind die Tragelemente 2 des Montage- und/oder Transportbandes 1 an beiden, d.h. sowohl in Förderrichtung als auch entgegen der Förderrichtung gerichteten Stirnseiten 6 konvex ausgebildet, wobei die gleichen Krümmungen jeweils dem Abschnitt eines Kreises entsprechen. Das jeweils benachbarte Tragelement ist als Zwischenelement 8 kürzer als das Tragelement 2 ausgebildet und weist auf seinen beiden Stirnseiten konkave Ausformungen 9 auf, die den Stirnseiten 6 der Tragelemente 2 zugewandt sind und die, wie die Stirnseiten der Tragelemente 2, jeweils aus Kreisabschnitten mit identischen Radien gebildet werden.

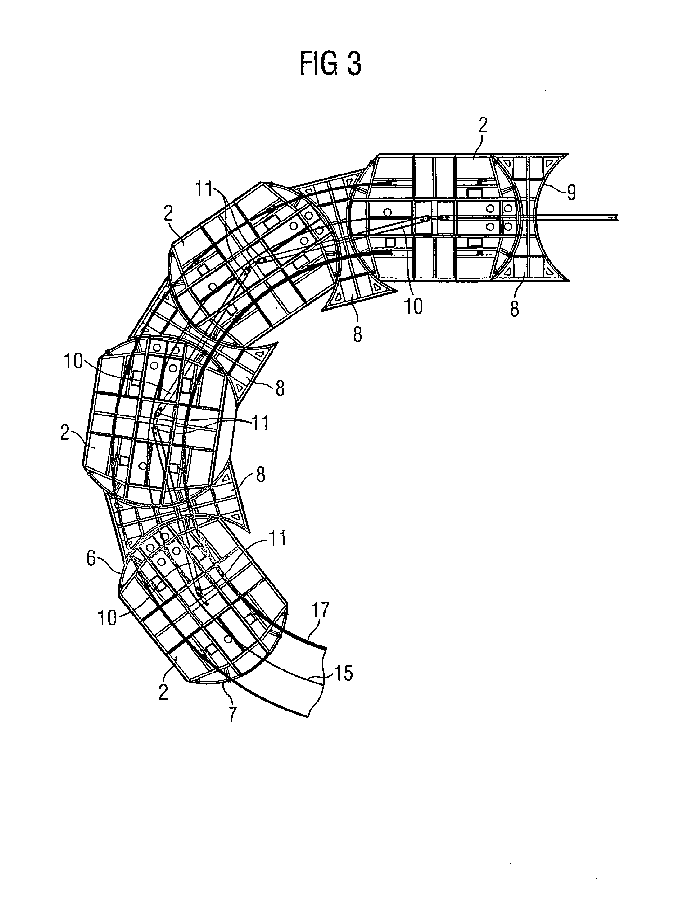

Wie in der vergrößerten Darstellung eines Kurvenverlaufs eines erfindungsgemäßen Montage- und/oder Transportbandes in Figur 3 erkennbar ist, sind an den Zwischenelementen 8 zentrale Koppelstangen 10 befestigt, die sich symmetrisch beidseitig der Zwischenelemente 8, an denen sie befestigt sind, in den Bereich der Tragelemente 2 erstrecken, wo die Koppelstangen 10 bei 11 angelenkt sind. Der Anlenkpunkt 11 der Koppelstangen 10 ist im Radienmittelpunkt sowohl der Stirnseiten 6 und 7 der Tragelemente 2 als auch der konvexen bzw. konkaven Stirnseiten 6 bzw. 9 der Zwischenelemente 8 angeordnet, so dass die Stirnseiten, beispielsweise 6 und 9 eines Tragelementes 2 und eines Zwischenelementes 8 über die Koppelstange 10 zwangsgeführt aufeinander abwälzen, wenn sich die Tragelemente 2 und Zwischenstücke 8 im Kurvenbereich bewegen. Die Koppelstangen 10, die an jedem Zwischenelemente 8 vorgesehen sind und jeweils mit den beiden benachbarten Tragelemente 2 verbundenen sind, bewirken, dass bei einem Montage- und/oder Transportband der Erfindung eine wesentlich feinere Polygonteilung hervorgerufen wird und vor allem, dass sich die Tragelemente 2 stets tangential zur Kurvenbahn 15 des Montage- und/oder Transportbandes 1 bewegen. Durch diesen Effekt benötigt die vorliegende Erfindung nur schmale Abdeckungen, wie sie in der Zeichnungsfigur 1 bei 12 erkennbar ist. Dadurch ist der zur Montage oder zum Transport zur Verfügung stehende nutzbare Plattformbereich der Tragelemente 2 wesentlich größer als dies beim Stand der Technik gemäß Figur 2 der Fall ist. Dieser vergrößerte Arbeitsbereich auf den Plattformen ermöglicht es, den Transport und die Montage auch im Kurvenbereich des erfindungsgemäßen Montage- und/oder Transportbandes ungehindert fortzusetzen, so dass die Kapazität und Verfügbarkeit der Tragelemente deutlich erhöht wird.

In der Zeichnungsfigur 4 ist in der Ansicht eines Tragelementes 2 von unten der Rahmen des Tragelementes 2 ebenso erkennbar, wie die unter dem Tragelement 2 vorgesehenen Tragrollen 13, die auf dem Boden abrollen. Erkennbar sind des weiteren die konvexen Stirnseiten 6 und 7 des Tragelementes 2 sowie insgesamt die Verstrebungen und Rahmenteile, die eine hohe Lastaufnahme ermöglichen.

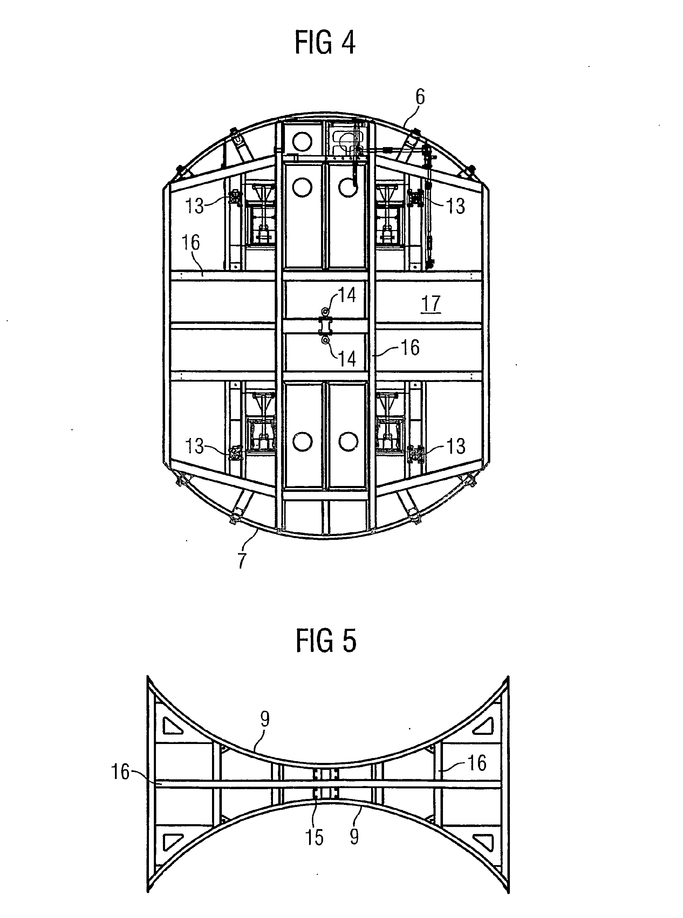

In Figur 5 ist eines der Zwischenelemente 8 isoliert dargestellt; die Koppelstange 10, die in den Figuren 4 und 5 nicht dargestellt ist, ist einerseits bei 14 am Tragelement 2 angelenkt und andererseits mittig an den Befestigungspunkten 15 des Zwischenstückes 8 so festgelegt, dass eine gelenkige Verbindung jeweils zweier Tragelemente 2 mit einem der zwischen angeordneten Zwischenstück 8 ermöglicht wird.

Der Rahmen 16 der Tragelemente 2 bzw. der Zwischenelemente 8 wird auf der Oberseite durch die Plattform 17 abgedeckt, die vorzugsweise aus Holz besteht. Die Fahrwerke mit den Rollen 13 sind ggf. mindestens teilweise angetrieben. Konventionelle Einzelantriebe, die auf den Tragelemente mitfahrend angeordnet sind kommen ebenso in Frage, wie die bekannten Reibradantriebe, die außen an den Tragelementen 2 angreifen und diese über Schubkräfte bewegen.

## Patentansprüche

1. Kurvengängiges Montage- und/oder Transportband (1), insbesondere für die Montage und den Transport von Kraftfahrzeugen oder Kraftfahrzeugteilen in der Fertigung, das durch gelenkig zueinander gelagerte, formschlüssig ineinandergreifende Tragelemente (2) gebildet wird, die jeweils eine obere Plattform und einen unteren Tragrahmen aufweisen und deren Stirnseiten (6,7,9) mit annähernd identischen Krümmungsradien kreisbogenförmig konvex und konkav gewölbt sind, so dass jeweils eine konvexe und eine konkave Ausnehmung zweier benachbarter Tragelemente (2) sowohl in Kurvenstrecken als auf der Geraden formschlüssig aneinanderliegend einen lückenlosen Transportbandübergang bilden,
**dadurch gekennzeichnet,**
**dass** in Längsrichtung des Montage- und/oder Transportbandes (1) jeweils Tragelemente (2) mit beidseitig konkaven (9) und beidseitig konvexen (6,7) Stirnseiten einander abwechseln und jeweils die Tragelemente (2) mit beidseitig konkaven Stirnseiten (9) als kurze Zwischenelemente (8) zwischen den die Last aufnehmenden Tragelementen (2) mit beidseitig konvexen Stirnseiten (6,7) ausgebildet sind.

2. Kurvengängiges Montage- und/oder Transportband nach Anspruch 1,
**dadurch gekennzeichnet,**
**dass** eine Vielzahl von Tragelementen (2) über Verbindungsglieder zu einem geschlossenen oder offenen Plattformverbund zusammengefügt sind.

3. Kurvengängiges Montage- und/oder Transportband nach Anspruch 1 und 2,
**dadurch gekennzeichnet,**
**dass** die Verbindungsglieder der Tragelemente Koppelstangen (10) sind und jeweils zwei benachbarte, durch ein gemeinsames Zwischenstück (8) getrennte Tragelemente (2) mit konvexen Stirnseiten (6,7) durch eine gemeinsame Koppelstange (10) gelenkig miteinander verbunden sind, wobei die beiden Anlenkpunkte (11) jeder Koppelstange (10) jeweils auf den Radienmittelpunkten der kreisbogenförmig konkav gekrümmten Stirnseiten (6,7,9) der Tragelemente (2,8) liegen.

4. Kurvengängiges Montage- und/oder Transportband nach Anspruch 1 bis 3,
**dadurch gekennzeichnet,**
**dass** stirnseitig in den einander zugewandten Bereichen der Tragelemente (2,8) Rollen- oder Gleitführungen vorgesehen sind.

5. Kurvengängiges Montage- und/oder Transportband nach einem der Ansprüche 1 bis 4, **dadurch gekennzeichnet,**
**dass** der Antrieb durch mehrere am Fahrweg der Tragelemente (2,8) verteilte Reibradstationen erfolgt.

6. Kurvengängiges Montage- und/oder Transportband nach einem der Ansprüche 1 bis 4,
**dadurch gekennzeichnet,**
**dass** der Antrieb des Montage- und/oder Transportbandes (1) über mindestens jedem n-ten Tragelement (2) zugeordnete Einzelantriebe erfolgt, die auf dem entsprechenden Tragelement (2) mitfahrend angeordnet sind.

7. Kurvengängiges Montage- und/oder Transportband nach einem der Ansprüche 1 bis 6,
**dadurch gekennzeichnet,**
**dass** die Energie- und/oder Datenversorgung der Tragelemente (2) permanent über Schleifleitungen erfolgt.

8. Kurvengängiges Montage- und/oder Transportband nach einem der Ansprüche 1 bis 6,
**dadurch gekennzeichnet,**
**dass** die Energie- und/oder Datenversorgung permanent oder streckenweise induktiv erfolgt.

9. Kurvengängiges Montage- und/oder Transportband nach einem der Ansprüche 1 bis 8,
**dadurch gekennzeichnet,**
**dass** die Führung mindestens jedes zweiten Tragelementes (2) über am Boden verlegte Führungsschienen (17) erfolgt.

10. Kurvengängiges Montage- und/oder Transportband nach einem der Ansprüche 1 bis 9,
**dadurch gekennzeichnet,**
**dass** der Abstand von zwei im Abstand verlegten Führungsschienen (17) im Kurvenbereich reduziert ist oder dass bei einer Führungsschiene die Führungsschiene in der Kurve mit geringerer Breite ausgeführt ist.

11. Kurvengängiges Montage- und/oder Transportband nach einem der Ansprüche 1 bis 10,
**dadurch gekennzeichnet,**
**dass** die in einem geschlossenen Plattformverband umlaufenden Tragelemente (2,8) vorzugsweise auf einer ovalen (stadionförmigen) Umlaufbahn mit zwei geraden Förderstrecken und beidseitig diese verbindenden halbkreisförmigen Kurven geführt sind.

12. Kurvengängiges Montage- und/oder Transportband nach einem der Ansprüche 1 bis 11,
**dadurch gekennzeichnet,**
**dass** die Seitenführung der Tragelemente (2) an äußeren und/oder inneren Tragschienen erfolgt.

13. Kurvengängiges Montage- und/oder Transportband nach einem der Ansprüche 1 bis 12,
**dadurch gekennzeichnet,**
**dass** die Zwischenelemente (8) ungeführt umlaufen.

14. Kurvengängiges Montage- und/oder Transportband nach einem der Ansprüche 1 bis 13,
**dadurch gekennzeichnet,**
**dass** in mindestens einzelnen Tragelementen (2) aktive oder passive Hubeinrichtungen eingebaut sind.

15. Kurvengängiges Montage- und/oder Transportband nach einem der Ansprüche 1 bis 14,
**dadurch gekennzeichnet,**
**dass** zur Niveauänderung der Umlaufebene Höhenbögen in den Trag- und/oder Führungsschienen (17) vorgesehen sind und die Tragelemente (2,8) zusätzlich über horizontale Gelenken miteinander verbunden sind.

16. Kurvengängiges Montage- und/oder Transportband nach einem der Ansprüche 1 bis 15,
**dadurch gekennzeichnet,**
**dass** die als Zwischenelement ausgestalteten Tragelemente (8) zu Inspektions- und/oder Wartungszwecken leicht abnehmbar gestaltet sind.

17. Kurvengängiges Montage- und/oder Transportband nach einem der Ansprüche 1 bis 15,
**dadurch gekennzeichnet,**
**dass** die vertikale Lastübertragung über mitfahrende Stahlrollen (13) erfolgt, wobei alle Stahlrollen (13) um die Hochachse drehbar gelagert sind.

## Claims

1. Curved assembly line and/or conveyor belt (1), in particular for the assembly and transport of motor vehicles or motor vehicle parts in production, which is formed by carrying elements (2) which are mounted in an articulated manner with respect to one another and engage positively one into the other and which in each case have an upper platform and a lower carrying frame and the end faces (6,7,9) of which are convexly and concavely curved in the form of an arc of a circle with approximately identical radii of curvature, so that in each case a convex and a concave recess of two adjacent carrying elements (2) form, bearing positively one against the other, a continuous conveyor belt transition both in curved sections and on a straight line, **characterized in that** in each case carrying elements (2) with end faces (9) concave on both sides and with end faces (6, 7) convex on both sides alternate with one another in the longitudinal direction of the assembly line and/or conveyor belt (1), and in each case the carrying elements (2) with end faces (9) concave on both sides are designed as short intermediate elements (8) between the load-receiving carrying elements (2) with end faces (6, 7) convex on both sides.

2. Curved assembly line and/or conveyor belt according to claim 1, **characterized in that** a multiplicity of carrying elements (2) are joined together via connecting members into a closed or open composite platform structure.

3. Curved assembly line and/or conveyor belt according to claims 1 and 2, **characterized in that** the connecting members of the carrying elements are coupling rods (10), and in each case two adjacent carrying elements (2) separated by a common intermediate piece (8) and having convex end faces (6, 7) are connected to one another in an articulated manner by means of a common coupling rod (10), the two articulation points (11) of each coupling rod (10) lying in each case on the radius center points of those end faces (6, 7, 9) of the carrying elements (2, 8) which are curved concavely in the form of an arc of a circle.

4. Curved assembly line and/or conveyor belt according to claims 1 to 3, **characterized in that** roller guides or sliding guides are provided on the end face in those regions of the carrying elements (2, 8) which face one another.

5. Curved assembly line and/or conveyor belt according to one of claims 1 to 4, **characterized in that** the drive takes place by means of a plurality of friction-wheel stations distributed along the travel of the carrying elements (2, 8).

6. Curved assembly line and/or conveyor belt according to one of claims 1 to 4, **characterized in that** the drive of the assembly line and/or conveyor belt (1) takes place via individual drives which are assigned to at least every nth carrying element (2) and which are arranged, co-moving, on the corresponding carrying element (2).

7. Curved assembly line and/or conveyor belt according to one of claims 1 to 6, **characterized in that** the energy and/or data supply of the carrying elements (2) takes place permanently via contact lines.

8. Curved assembly line and/or conveyor belt according to one of claims 1 to 6, **characterized in that** the energy and/or data supply takes place permanently or inductively in sections.

9. Curved assembly line and/or conveyor belt according to one of claims 1 to 8, **characterized in that** the guidance of at least every second carrying element (2) takes place via guide rails (17) laid on the ground.

10. Curved assembly line and/or conveyor belt according to one of claims 1 to 9, **characterized in that** the distance between two guide rails (17) laid with a spacing between them is reduced in the curved region, or **in that**, in the case of one guide rail, the guide rail is designed with a small width in the curve.

11. Curved assembly line and/or conveyor belt according to one of claims 1 to 10, **characterized in that** the carrying elements (2, 8) rotating in a closed composite platform structure are preferably guided on an oval (stadium-shaped) path of rotation with two straight conveying sections and with semicircular curves connecting these on both sides.

12. Curved assembly line and/or conveyor belt according to one of claims 1 to 11, **characterized in that** the lateral guidance of the carrying elements (2) takes place at outer and/or inner carrying rails.

13. Curved assembly line and/or conveyor belt according to one of claims 1 to 12, **characterized in that** the intermediate elements (8) rotate, unguided.

14. Curved assembly line and/or conveyor belt according to one of claims 1 to 13, **characterized in that** active or passive lifting devices are installed in at least individual carrying elements (2).

15. Curved assembly line and/or conveyor belt according to one of claims 1 to 14, **characterized in that** vertical arcs are provided in the carrying and/or guide rails (17) for changing the level of the plane of rotation, and the carrying elements (2, 8) are additionally connected to one another via horizontal joints.

16. Curved assembly line and/or conveyor belt according to one of claims 1 to 15, **characterized in that** the carrying elements (8) designed as an intermediate element are configured to be easily removable for inspection and/or maintenance purposes.

17. Curved assembly line and/or conveyor belt according to one of claims 1 to 15, **characterized in that** vertical load transmission takes place via co-moving steel rollers (13), all the steel rollers (13) being mounted rotatably about the vertical axis.

## Revendications

1. Bande courbe de montage et/ou de transport (1), en particulier pour monter ou pour transporter des véhicules automobiles ou des parties de véhicule automobile pendant la fabrication, formée par des éléments porteurs (2) qui sont montés de manière articulée l'un par rapport à l'autre et sont en prise par combinaison de formes l'un avec l'autre, qui comportent respectivement une plateforme supérieure et un cadre porteur inférieur et dont les côtés frontaux (6, 7, 9) ont une courbure convexe et une courbure concave en arc de cercle aux rayons approximativement identiques de sorte que, disposés par combinaison de formes l'un près de l'autre, un creux convexe et un creux concave sur deux éléments porteurs (2) voisins forment une transition continue de la bande de transport aussi bien sur des trajets courbes que sur des droites,
**caractérisée en ce que**, en direction longitudinale de la bande de montage ou de transport (1), des éléments porteurs (2) dont les côtés frontaux sont concaves (9) de chaque côté alternent respectivement avec d'autres convexes (6, 7) de chaque côté et que les éléments porteurs (2) dont les côtés frontaux sont concaves (9) de chaque côté sont respectivement formés en tant que courts éléments intermédiaires (8) entre les éléments porteurs (2) qui reçoivent la charge et dont les côtés frontaux (6, 7) sont convexes de chaque côté.

2. Bande courbe de montage et/ou de transport selon la revendication 1, **caractérisée en ce que** de nombreux éléments porteurs (2) sont réunis par des organes de liaison pour obtenir un assemblage fermé ou ouvert de plateformes.

3. Bande courbe de montage et/ou de transport selon la revendication 1 ou 2, **caractérisée en ce que** les organes de liaison des éléments porteurs sont des tiges de couplage (10) et que deux éléments porteurs (2) voisins munis de côtés frontaux (6, 7) convexes et séparés par une pièce intermédiaire (8) commune sont respectivement reliés l'un à l'autre de manière articulée par une tige de couplage (10) commune, les deux points d'articulation (11) de chaque tige de couplage (10) étant respectivement au centre du rayon des côtés frontaux (6, 7, 9) - des éléments porteurs (2, 8) - à courbure concave en arc de cercle.

4. Bande courbe de montage et/ou de transport selon l'une des revendications 1 à 3, **caractérisée en ce que** des guidages à rouleaux ou à glissement sont prévus frontalement dans les zones orientées l'une vers l'autre des éléments porteurs (2, 8).

5. Bande courbe de montage et/ou de transport selon l'une des revendications 1 à 4, **caractérisée en ce que** l'entraînement est réalisé par plusieurs postes à galets de friction répartis sur le trajet des éléments porteurs (2, 8).

6. Bande courbe de montage et/ou de transport selon l'une des revendications 1 à 4, **caractérisée en ce que** l'entraînement de la bande de montage ou de transport (1) est réalisé par des entraînements particuliers, associés au moins à chaque n-ième élément porteur (2) et placés sur l'élément porteur (2) correspondant de façon à être emportés.

7. Bande courbe de montage et/ou de transport selon l'une des revendications 1 à 6, **caractérisée en ce que** ce sont des câbles traînants qui alimentent en permanence les éléments porteurs (2) en énergie et/ou en données.

8. Bande courbe de montage et/ou de transport selon l'une des revendications 1 à 6, **caractérisée en ce que** l'alimentation en énergie et en données a lieu inductivement soit en permanence soit sur certains tronçons.

9. Bande courbe de montage et/ou de transport selon l'une des revendications 1 à 8, **caractérisée en ce qu'**au moins un élément porteur (2) sur deux est guidé par des rails de guidage (17) posés au sol.

10. Bande courbe de montage et/ou de transport selon l'une des revendications 1 à 9, **caractérisée en ce que** la distance de deux rails de guidage (17) posés à distance est plus faible dans la zone courbe ou que, sur un rail de guidage, le rail de guidage a une moindre largeur dans la courbe.

11. Bande courbe de montage et/ou de transport selon l'une des revendications 1 à 10, **caractérisée en ce que** les éléments porteurs (2, 8) qui circulent dans un assemblage fermé de plateformes sont de préférence guidés sur une trajectoire ovale (en forme de stade) comportant deux voies de transport rectilignes et des courbes en demi cercle qui les relient de chaque côté.

12. Bande courbe de montage et/ou de transport selon l'une des revendications 1 à 11, **caractérisée en ce que** les éléments porteurs (2) sont guidés latéralement sur des rails porteurs extérieurs et/ou intérieurs.

13. Bande courbe de montage et/ou de transport selon l'une des revendications 1 à 12, **caractérisée en ce que** les éléments intermédiaires (8) circulent sans être guidés.

14. Bande courbe de montage et/ou de transport selon l'une des revendications 1 à 13, **caractérisée en ce que** des dispositifs de levage actifs ou passifs sont montés dans certains éléments porteurs (2) au moins.

15. Bande courbe de montage et/ou de transport selon l'une des revendications 1 à 14, **caractérisée en ce que** des arcs gradués sont prévus dans les rails porteurs et/ou rails de guidage (14) pour modifier le niveau du plan de rotation et les éléments porteurs (2, 8) sont en outre reliés l'un à l' autre par des articulations horizontales.

16. Bande courbe de montage et/ou de transport selon l'une des revendications 1 à 15, **caractérisée en ce que** les éléments porteurs (8) conçus comme des éléments intermédiaires sont faciles à retirer dans des buts d'inspection et/ou d'entretien.

17. Bande courbe de montage et/ou de transport selon l'une des revendications 1 à 15, **caractérisée en ce que** le transfert vertical des charges a lieu par des rouleaux en acier (13), tous les rouleaux en acier (13) étant montés de façon à pouvoir tourner autour de l'axe vertical.
